# EUROPEAN PATENT SPECIFICATION

(11) **EP 3 799 148 B1**
(45) Date of publication and mention of the grant of the patent: **15.11.2023**
(21) Application number: 19200501.5
(22) Date of filing: 30.09.2019
(51) Int. Cl.: H01M 10/655, G01R 31/396, H01M 10/42, H01M 10/48, H01M 50/209, H01M 50/213

(54) **BATTERY MODULE WITH FLEXIBLE INTERCONNECTOR**
BATTERIEMODUL MIT FLEXIBLER VERBINDUNGSLEITUNG
MODULE DE BATTERIE DOTÉ D'UN INTERCONNECTEUR FLEXIBLE

(43) Date of publication of application: 31.03.2021
(73) Proprietor: Samsung SDI Co., Ltd., Gyeonggi-do 17084 (KR)
(72) Inventor: Weinberger, Martin, 9063 Maria Saal (AT); Wuensche, Ralph, 8010 Graz (AT); Erhart, Michael, 8054 Seiersberg-Pirka (AT)
(74) Representative: Gulde & Partner

(56) References cited:
- EP-A1- 3 316 384
- EP-A2- 2 804 284
- US-A1- 2014 370 343
- US-A1- 2016 372 796
- US-A1- 2019 131 672

## Description

### Field of the Invention

The present invention relates to battery module with flexible interconnector comprising a flexible printed circuit, FPC, for connecting a cell supervision circuit, CSC, with a plurality of measurement points at a battery module for temperature and/or voltage measurements, wherein the FPC is wrapped around the battery module and covers different surfaces thereof.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for electronic devices, such as cellular phones, notebooks and camcorders, while high-capacity rechargeable batteries are used as power supply for hybrid vehicles or the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with electrical consumers in order to form a battery system.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system (BMS) for processing this information.

The BMS is usually coupled to the controller of one or more electrical consumers as well as to each of the battery modules of the battery system. For controlling a plurality of battery modules by a single BMS a daisy chain setup may be used. In such setup, the BMS, as master, is connected for communication in series to a plurality of battery modules, particularly to a plurality of cell supervision circuits, CSC, of the respective battery modules. Therein, the BMS is configured to receive and process information of each of the CSCs as well as of external consumer or control units, e.g. a vehicle board net, connected thereto. Further, each of the CSCs is configured to detect voltages and/or temperatures of an individual battery module and to communicate the detected voltages and/or temperatures to the BMS.

In order to connect the CSC with the individual battery cells of a battery module, various electrical conductor paths for voltage measurement and control and for temperature measurement are used in current designs of cell voltage and temperature instrumentation. These electrical conductor paths are usually provided by a wire harness with crimped contact terminals for an interface to the CSC on one end and with an interface to be soldered, welded or riveted to the busbars on the other hand. Such wire harness usually needs to be held in position by a plastic carrier to which the harness is usually attached to wire-by-wire. Thus, the mounting of the wire harness is a time consuming step in the manufacturing process. Further, the carrier and/or a frame for the wire harness adds additional components to the system.

It is thus an object of the present invention to overcome or reduce at least some of the drawbacks of the prior art and to provide a solution for connecting the individual cells of a battery module or system to a cell supervision circuit that can be easily and cost-effectively assembled during the manufacturing process and reduces the total component count.

US 2014/370343 A1, US 2019/131672 A1, US 2016/372796 A1 and EP 2 804 284 A2 are relevant prior art. They do not disclose a flexible interconnector wrapped around a plurality of battery cells and a heat exchanger as defined in claim 1.

### Summary of Invention

One or more of the drawbacks of the prior art could be avoided or at least reduced by means of the present invention. In particular, a battery module is provided as defined in claim 1.

In the present invention, the CSC preferably comprises a microprocessor, ASIC, or any (integrated) circuit that is configured to receive signals corresponding to the voltage and/or temperature of at least one battery cell of the module. Preferably, the CSC is further configured to process, analyze and/or store the received signals and the CSC may be further configured to transmit signals related to the received signals to a BMS. Further preferred, the CSC may be configured to perform at least one control function with respect to the battery module or with respect to at least one battery cell thereof. Therein, the control functions may comprise measurements or determinations of cell voltages, cell currents, cell resistances or cell capacities and may further comprise the active or passive balancing of cell voltages or cell currents of battery cells in the battery module.

In the present invention, the strip-shaped FPC has a lengthwise extension that exceeds the width of the FPC significantly, preferably by a ratio of at least 5:1, 10:1, 50:1, or more. Further, the width of the FPC exceeds the height thereof significantly, preferably by a ratio of at least 2:1, 5:1, 20:1, or more. The FPC may comprise a flexible plastic substrate, preferably a polyimide, PEEK or polyester, with conducting structures, e.g. metallization or a conductive polymer disposed on or in the flexible substrate.

In the present invention, each of the main surfaces is preferably span between the length direction and the width direction of the FPC. Further, the insulating main surfaces may be formed by respective layers of the FPC laminated to each other or may be formed by a monolithic body of the FPC, i.e., molded or casted from an insulating substrate. In the present invention, a first subset of the conducting lines may be predominantly electrically conducting, while a second subset of conducting lines may be predominantly thermally conducting. According to another embodiment, all of the conducting lines are electrically conducting.

In the present invention, each of the conducting lines is fully covered by the insulating main surfaces, i.e., insulating material, of the FPC except in the at least one contact portion and the at least one connecting portion. Preferably, each or at least some of the conducting line comprises solely one contact portion. Also preferred, each or at least some of the contact portions are exposed by a contact aperture in one of the first insulating main surface and the second insulating main surface. The contact apertures are configured to allow an electric and/or thermal contact between the respective conducting line and a surface of a battery cell and/or another part of the battery module the FPC is disposed on. Preferably, the electric and/or thermal contact is provided or at least enhanced by an additional contact structure, such as e.g., solder, braze, or the like.

In the present invention, the flexible interconnector preferably comprises a curvature that is adapted to the surfaces of different orientation, i.e., to a non-regular geometry of the plurality of aligned battery cells, i.e., the battery module. Hence, the flexible interconnector, particularly the FPC comprises at least one bend, preferably a plurality of bends, which follows a surface of at least one battery cell or another component of the battery module. Thus, the FPC is disposed above a plurality of the surfaces with different orientations of the cells and faces the respective surface via one of the insulating main surfaces. Further, the conducting lines in the FPC are in electric or thermal contact with the plurality of surfaces of different orientations of the battery cells (battery module) via at least one contact apertures in the respective insulating main surface.

According to the invention, the FPC is wrapped (winded or coiled) around the battery module such that all components of the battery module that shall be electrically and/or thermally connected with the CSC are contacted by at least one conducting line via a contact aperture. In other words, the flexible interconnector is configured to provide all electrical connections between the CSC and components of the battery module that shall be monitored by the CSC. The battery module of the present invention thus advantageously provides a new solution for interconnecting the measurement points for voltage and/or temperature measurements of the battery module, i.e., across battery cells, busbars, heat exchangers, or the like with the CSC. Therein, only a single component has to be wrapped around the battery module such that contact apertures are aligned with the desired measurement spots of the battery module. The battery module of the invention can thus be more easily manufactured than the battery modules of the prior art, while decreasing the component count and costs of manufacture.

In a particularly preferred embodiment, the flexible interconnector is wrapped around cylindrical battery cells such that the contact portions contact base surfaces and lateral surfaces of cylindrical battery cells. Preferably, the flexible interconnector contacts the base surfaces of a first subset of battery cells and the lateral surfaces of a second subset of battery cells. According to this embodiment, the battery module is comprising, preferably consisting of, cylindrical battery cells, each having a pair of opposing base surfaces connected to each other by a lateral surface. Particularly preferred, the base surfaces are of cylindrical or elliptical shape. While the base areas of the plurality of battery cells might be aligned, the lateral surfaces of the battery cells have different orientations with respect to each other as well as with respect to the base surfaces. However, the plasticity and flexibility of the flexible interconnector allows wrapping it around the battery cells such that it can electrically and/or thermally contact a variety of these surfaces with different orientations. Further, the flexible interconnector may be thread through between different battery cells, hence allowing to electrically and thermally contact even inner battery cells of the plurality of battery cells.

According to another preferred embodiment, the battery cells are prismatic battery cells, each comprising a cell case and a cap assembly placed on the cell case and the flexible interconnector is wrapped around prismatic battery cells such that contact portions contact the cell cases and the cap assemblies of prismatic battery cells. Preferably, the flexible interconnector contacts the cell cases of a first subset of battery cells and the cap assemblies of a second subset of battery cells. According to this embodiment, the battery module comprises, preferably consisting of, prismatic battery cells, each having cell case with one open base area and a cap assembly for closing the cell case. Preferably the prismatic cells are aligned such that wide side surfaces are facing each other, while the not facing side surfaces as well as the cap assemblies face in different directions. However, the plasticity and flexibility of the flexible interconnector allows wrapping it around the battery cells such that it can contact a variety of these surfaces with different orientations. Further, the flexible interconnector may be thread through between different battery cells, hence allowing to electrically and thermally contact even inner battery cells of the plurality of battery cells.

In the present invention, a plurality of contact portions may be contacting the battery cells and at least one contact portion is contacting the heat exchanger. Further preferred, the battery module comprises more than one heat exchanger and each heat exchanger is contacted by at least one contact portion. The heat exchangers of the battery module are preferably configured as a base plate or as a top cover with integrated cooling means. However, other heat exchanger configurations, i.e., disposed between the cells are preferred as well.

Further preferred, the battery module further comprises a plurality of busbars, wherein each busbar interconnects cell terminals of at least two battery cells and wherein the flexible interconnector is wrapped around battery cells and around the at least one busbar such that contact portions contact battery cells and the at least one busbar. Some of the busbars preferably interconnect cell terminals of different polarity, i.e., connect battery cells in series. Other busbars preferably interconnect cell terminals of same polarity, i.e., connect battery cells in parallel. Further, busbars may connect battery cells in series and in parallel. The busbars are preferably disposed on top surfaces or on cap assemblies of prismatic battery cells or may be also preferably disposed on base surfaces of cylindrical battery cells. Preferably, a plurality of contact portions is contacting the battery cells and a plurality of contact portions contacts the busbars. Particularly preferred, the busbars are contacted for measuring cell voltages, whereas the cells might be contacted for measuring temperatures.

In a further preferred embodiment, the connecting portions of at least some of the conducting lines are arranged at a terminal end of the strip-shaped FPC. Particularly preferred, the conducting lines extend over the insulating main surfaces at a terminal end of the FPC in order to be electrically connected to the CSC by soldering, brazening orwelding. In a further preferred embodiment, at least some and preferably each of the conducting lines extends across the whole length of the strip-shaped FPC and comprises a first connecting portion at a first terminal end and a second connecting portion at a second terminal end. Exemplarily, the conducting lines may extend over the insulating main surfaces at both terminal ends of the FPC in order to be electrically connected to the CSC by soldering, brazening or welding. Thus, a closed electric connection is realized with the CSC, e.g., for measuring a voltage drop along the conducting line in dependence of a thermistor located at a contact portion thereof. Also preferred, the flexible interconnector further comprises at least one connector plug that is attached to at least one terminal end of the strip-shaped FPC, wherein the connector plug is connected to at least some of the conducting lines, preferably to all of the conducting lines, of the FPC, particularly to terminal ends thereof and is configured for being electrically connected to the CSC, e.g., by providing a plurality of contact pins configured for being connected to the conducting pins and for being connected to pin sockets of the CSC.

According to a further preferred embodiment, the connecting portions of at least some of the conducting lines are arranged at a center part of the strip-shaped FPC. In other words, center parts of the strip-shaped FPC are configured for being connected to the CSC, i.e., for providing an electrical connection with the CSC, e.g., with a landing pad on the CSC. Different conducting lines of the flexible interconnector might be configured to be connected to different components of the CSC for providing signals to different elements of the CSC. In other words, the same flexible interconnector might be connected to different landing pads on a CSC along a length of the flexible interconnector by contact pads in the center part.

Preferably, each of the contact apertures exposes one or a subset of conducting lines. Hence, solely a single conducting line may be used to measure the voltage at a contact portion or multiple conducting lines may be used to measure voltage and/or temperature at a contact portion. Using multiple lines provides redundancy and or may allow to measure higher currents and/or voltages at a measurement point connected to the contact portion. However, in most case exposing a single conducting line with a respective contact portion will be sufficient to measure voltages and/or temperatures at that contact portion. Further, using solely a single conducting line allows for measuring a maximum amount of contact portions.

According to another preferred embodiment of the battery module, a first subset of conducting lines serve for measuring electric voltages at the respective contact portions, i.e., at contact portions exposing the conducting lines of the first subset of conducting lines. In this embodiment further a second subset of conducting lines serve for measuring temperatures at the respective second contact portions, i.e., at the contact portions exposing the conducting lines of the second subset of conducting lines. According to this embodiment, defined subsets of conducting lines are used for measuring voltages and temperatures, respectively. Therein, the voltages are preferably measured by providing the electric potential at the respective measurement point (contact portion) to a respective sensor input at the CSC.

The temperatures are measured via the second subset of conducting lines either by conducting the respective temperature level via the respective conducting line to a respective input of a temperature sensor at the CSC. By considering thermal propagation properties and the length of the conducting line between the input and the contact portion one can derive the temperature at the contact portion from the temperature of the conducting line at the CSC.

According to another preferred embodiment, temperature at a contact portion is measured via a voltage drop at a thermistor positioned at the contact portion of the conducting line. According to this embodiment, the contact portions of the second subset of conducting lines as defined above contact battery cells, and eventually other components of the battery module, via thermistors. Hence, a voltage drop at the thermistor depends on a temperature at the contact portion, which enables temperature measurements at the contact portion by applying a certain voltage potential to one terminal end of the conducting line. Preferably, the voltage drop is measured at the other terminal end of the conducting line that is connected to the CSC. Hence, both terminals ends of the conducting line might be connected to the CSC.

Another aspect of the present invention relates to a method for manufacturing a battery module as defined in claim 12.

In the present invention, the attachment of the terminal end of the flexible interconnector occurs preferably via an adhesive, such as e.g., an applied adhesive or a self-adhesive portion of the flexible interconnector. However, the attachment of the terminal end may also be carried out by a connector plug disposed at a terminal end of the flexible interconnector, wherein the connector plug is connected to a CSC, e.g., to a socket thereof, and wherein the connector plug is secured at the CSC, particularly at the socket. However, other ways of attaching the terminal end of the flexible interconnector are also preferred, such as e.g., a connection provided between a hook and a loop or a push button.

In the present invention, , the pre-module is disposed on a rotation platform and the flexible interconnector is attached to the pre-module via a robot arm connected to a feeding machine providing the FPC. After the terminal end of the flexible interconnector is attached to the pre-module, the rotation platform is rotated and the FPC is provided by the feeding machine under tension to wrap the FPC tightly to the exterior surfaces of the battery cells such that a close contact is provided between the FPC and the exterior surfaces of the pre-module, particularly between the contact portions and the surfaces of different orientation.

In the present invention, the CSC may also be applied to the pre-module after wrapping the flexible interconnector. Additionally or alternatively, the pre-module comprises at least one heat exchanger that is in thermal contact with the plurality of battery cells, such as e.g., a base plate and/or a top cover with integrated cooling means. Additionally or alternatively, the pre-module comprises at least one busbar that interconnects cell terminals of at least two battery cells of the plurality of aligned cells.

In the present invention, the CSC may be mounted to the pre-module after the flexible interconnector is mounted to the pre-module, e.g., when the initial connection is by adhesive.

After the flexible interconnector is wrapped around the pre-module such that the contact portions contact the surfaces of different orientation of the pre-module, the at least one heat exchanger and/or the at least one busbar, the actual electric connections between the contact portions and the battery pre-module are provided. That is, after the flexible interconnector is wrapped around the pre-module, the electrical connections might be provided by means of welding, stamping, brazing and/or soldering. The electrical connections might be provided through the FPC, e.g., between a contact portion in the first main insulating surface thereof and the battery pre-module by pressure and/or heat applied via the second main surface.

Further aspects of the present invention could be learned from the dependent claims, the attached drawings and/or the following description of the attached drawings.

### Brief Description of the Drawings

Features will become apparent to those of ordinary skill in the art by describing in detail exemplary embodiments with reference to the attached drawings in which:
- Fig. 1: illustrates a perspective view of a battery module according to an embodiment;
- Fig. 2: illustrates a schematic cross section of a flexible printed circuit, FPC, of a flexible interconnector according to an embodiment;
- Fig. 3: illustrates a schematic perspective view of a side surface of the battery module according to an embodiment;
- Fig. 4: illustrates a schematic perspective view of a bottom surface of the battery module according to an embodiment;
- Fig. 5: illustrates a schematic exploded view of a battery module according to an embodiment; and
- Fig. 6: (A) to (D) schematically illustrates the steps of a method for manufacturing a battery module of the invention according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Processes, elements, and techniques not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise. As used herein, the term "and/or" includes any and all combinations of one or more of the associated listed items. Expressions such as "at least one of," when preceding a list of elements, modify the entire list of elements and do not modify the individual elements of the list.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention as set out in the appended claims.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

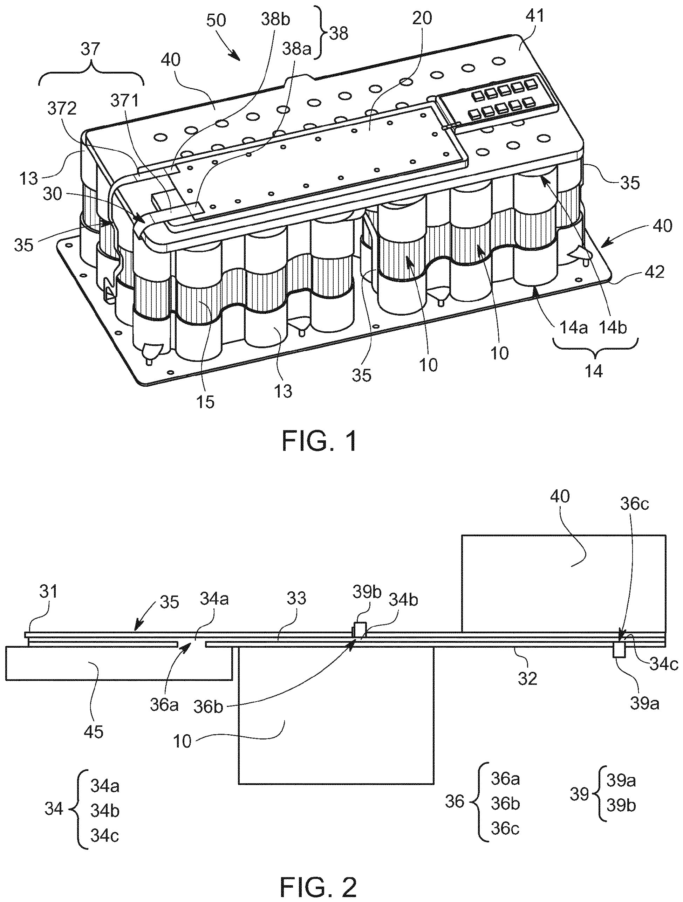

Figure 1 illustrates a schematic perspective view of a battery module 50 according to an embodiment. The battery module 50 comprises a plurality of cylindrical battery cells 10, each having a pair of opposing circular base surfaces 14 which are connected by lateral surface 15. Each of the battery cells 10 is disposed within a respective cell case 13. The cell case 13 is divided into an upper cell case and a lower cell case, wherein a central part of the lateral surface 15 of each of the battery cells 10 is not covered by the cell case 13.

The plurality of battery cells 10 is disposed on a base plate 42 that is configured as a lower heat exchanger 40 for transporting away heat emitted by the battery cells 10 via their lower base surface 14a. A top cover 41 is disposed on top of the plurality of battery cells 10 and is configured as an upper heat exchanger 40 for transporting away heat emitted by the battery cells 10 via their upper base surface 14b. On top of the top cover 41, a cell supervision circuit, CSC, 20 is provided that is configured for receiving signals corresponding to the voltage and temperature of battery cells 10 of the battery module 50. The CSC 20 is further configured for communicating with a battery management system (not shown) and for controlling voltages of the battery cells 10 of the battery module 50 via active or passive balancing.

The battery module 50 further comprises a flexible interconnector 30 with a strip-shaped flexible printed circuit, FPC, 35, a cross section of which is shown schematically in Figure 2. The FPC 35 comprises a first insulating main surface 31 and a second insulating main surface 32 opposite to the first insulating main surface 31. A plurality of conducting lines 33 is disposed between the insulating main surfaces 31, 32 such that they are electrically and/or thermally insulated from the surroundings. As it is shown in Figure 1, a first terminal end 371 (e.g., a first connecting portion 371 of both connecting portion 37 of the FPC 35) of the FPC 35 is connected to the CSC 20 via a first connector plug 38a and a second terminal end 372 (e.g., a second connecting portion 372 of both connecting portion 37 of the FPC 35) of the FPC 35 is connected to the CSC via another (second) connector plug 38b. The flexible interconnector 30 thus forms an electric loop starting and terminating at the CSC 20.

As further shown in Figure 2, the contact lines 33 of the FPC 35 comprise a plurality of contact portions 34a, 34b, 34c, in which they are exposed by contact apertures 36a, 36b, 36c in the first insulating main surface 31 (particularly contact aperture 36b) or in the second insulating main surface 32 (particularly contact apertures 36a, 36c). In other words, an electric and/or thermal connecting can be established between the conducting line 33 and an adjacent object in the contact portion via the respective contact aperture 36a, 36b, 36c. By wrapping the FPC 35 around the battery module 50 voltages and/or temperatures at its constituents might thus be measured.

As illustrated in Figure 1, the FPC 35 of the flexible interconnector 30 is wrapped around the battery module 50 and extending over various constituents thereof. Starting from the first terminal end 371, the FPC 35 is guided underneath the top cover 41 and in between the battery cells 10, particularly going up and down between the battery cells 10 between the top cover 41 and the base plate 42. The FPC 35 then extends along a lower side of the base plate 42 end extends upward along a battery cell 10 towards the second terminal end 372 at the CSC 20. Along its extension, the FPC 35 comprises multiple contact portions 34 in electric and/or thermal contact with a plurality of measurement points of the battery module 50.

As shown in Figure 2, the FPC 35 extends along a battery cell 10, a heat exchanger 40 and a busbar 45. At each of these components, one of the first and second main insulating surfaces 31, 32 has contact aperture 36 exposing a contact portion 34 of a conducting line 33. Therein, different contact apertures 36 expose different conducting lines 33. Particularly, a first contact aperture 36a in the second insulating main surface 32 adjacent to a busbar 45 exposes a conducting line 33 to the busbar 45 in the region of a first contact portion 34a. The conducting line 33 is electrically connected to the busbar 45 by soldering. A third contact aperture 36c in the second main insulating surface 32 is disposed near the heat exchanger 40 and exposes a third contact portion 34c. However, the heat exchanger 40 is adjacent to the first main insulating surface 31 such that no electric connection is established between the heat exchanger 40 and the conducting line 33. A first thermistor 39a is disposed in the third contact aperture 36c thus being in the vicinity of the heat exchanger 40. The ohmic resistance of the thermistor, e.g., a NTC, thus depends on the temperature of the thermistor 39a and a voltage drop in the respective conducting line 33 is thus indicative of a temperature of the first thermistor 39a. Another second thermistor 39b is disposed in a second contact aperture 36b that exposes a second contact portion 34b and that is adjacent and facing away from the battery cell 10. The voltage drop over second thermistor 39b is thus indicative of a temperature of the battery cell 10.

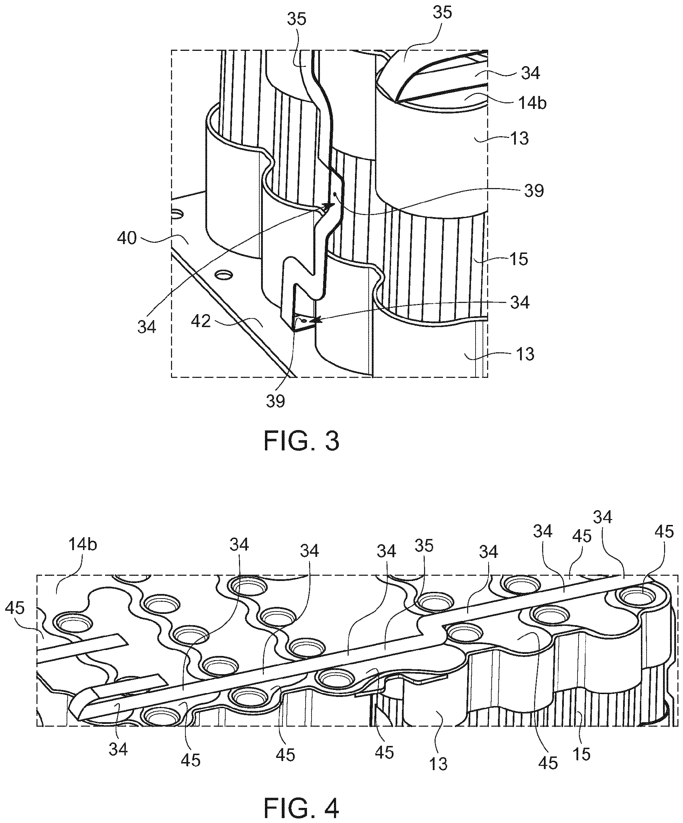

As shown in Figure 3, for temperature measurements the FPC 35 is attached to a surface of the battery cells 10, particularly to a part of the lateral surface 15 of the battery cell 10 that is not covered by a cell case 13. In the attachment portion of the FPC 35, the thermistor 39 is disposed (dark dot) and is thus influenced by the temperature of the nearby battery cell 10. As shown in Figure 4, for voltage measurements the FPC 35 extends over a plurality of busbars 45 at a upper base surface 14b of battery module 50. The FPC 35 comprises a plurality of contact portions 34, each adjacent and facing towards one of the busbars 45 and each exposing another one of the conducting lines 33. Hence, an electric connection is established between the respective conducting line 33 and the respective busbar 45 and hence a voltage potential at the busbar is provided via that conducting line 33 to a respective voltage measurement input at a CSC 20, exemplarily via a pin of a connector plug 39.

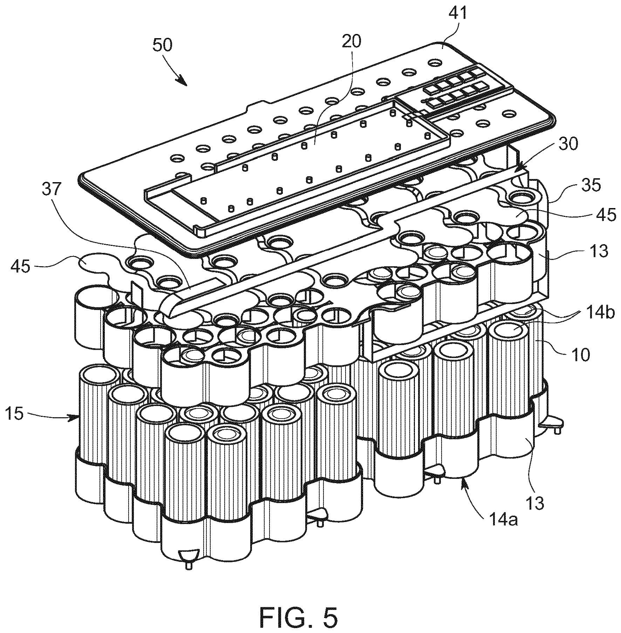

Figure 5 shows a schematic illustration of an exploded view of the battery module of Figure 1, wherein the base plate 42 is omitted in the illustration. As one can see in Figure 5, the cell cases comprise openings that are aligned with the base surfaces 14 of the battery cells 10 for enabling to contact the battery cells 10. The flexible interconnector 30 with the strip-shaped flexible printed circuit, FPC, 35, is illustrated in Figure 5 in a similar configuration as those in Figure 1 but wherein the second terminal end 372 and a portion of the FCP 35 between the second terminal end 372 and a middle portion of the FCP 35 connected to lateral surfaces 15 of the battery cells 10 is omitted. The FCP 35 as illustrated in Figure 5 extends underneath top cover 41, along outer lateral surfaces 15 of the battery cells, along lower base surfaces 14a of the battery cells 10 and finally along inner lateral surfaces 15 of the battery cells 10.

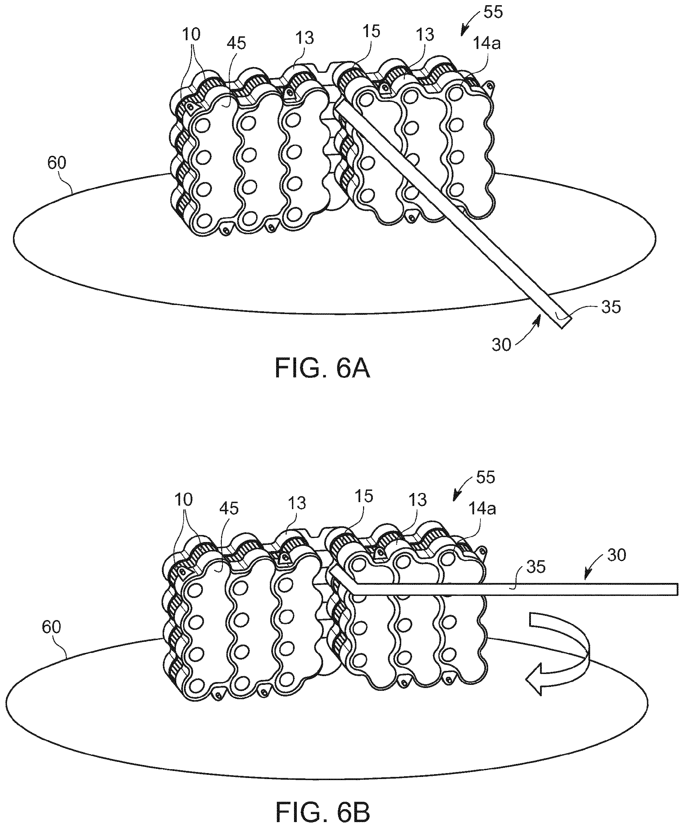

Figures 6(A) to 6(D) schematically illustrates the steps of a method for manufacturing a battery module 50 of the invention according to an embodiment. As shown in Figure 6(A), a pre-module 55 is provided that comprises a plurality of cylindrical battery cells 10 disposed in two-part cell cases 13 as already described above. At the lower and upper base surface 14a, 14b of the battery cells 10, the terminals of the battery cells 10 are interconnected in parallel and/or in series via a plurality of busbars 45. The plurality of aligned battery cells 10 comprise surfaces of different orientation, particularly the lateral surfaces 15 of the aligned battery cells 10 face into a plurality of different orientations. The pre-module 55 is disposed on a table 60 that is configured for being rotated during the method of the invention.

As further shown in Figure 6(A), a terminal end of a flexible interconnector 30 is attached to the pre-module 55, via a self-adhesive portion thereof that is adhered to the pre-module 55 via a robot arm of a feeding machine (not shown). Therein, the flexible interconnector 30 comprises a strip-shaped flexible printed circuit 35, FPC, as described above with a first insulating main surface 31, a second insulating main surface 32 opposite the first insulating main surface 31 and a plurality of thermally and/or electrically conducting lines 33 disposed between the first insulating main surface 31 and the second insulating main surface 32. Further, each conducting line 33 comprises at least one contact portion 34 that is exposed by a contact aperture 36 in the first 31 or the second insulating main surface 32.

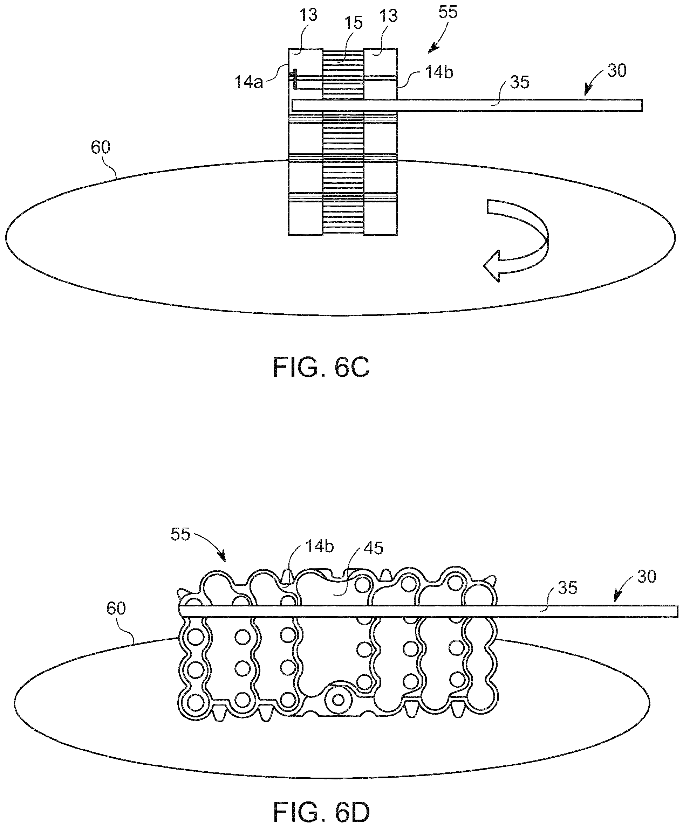

As show in Figures 6(B) to 6(D), after attachment of the terminal portion of the flexible interconnector 30, the rotatable table 60 starts to spin, while the flexible interconnector 30 is kept under tension by the robot arm of the feeding machine (not shown). Thereby, the flexible interconnector 30 is wrapped around the pre-module 55 such that the contact portions 34 contact the surfaces of different orientations of the battery module 50. Therein, a plurality of busbars 45 disposed on a lower base surface 14a of the battery cells 10 is contacted by the flexible interconnector 30, particularly by a plurality of respective contact portions 34 that are exposed by respective contact apertures 36, as shown in Figure 6(B). Further, the lateral surfaces 15 of different orientation of the battery cells 10 are contacted by respective contact portions 34 for temperature measurements as shown e.g., in Figure 6C. Further, respective contact portions 34 of the flexible interconnector 30 are contacted with a plurality of busbars 45 disposed on an upper base surface 14b of the battery cells for connecting them to respective conducting lines 33 as shown in Figure 6(D). These conducting lines 33 can then be connected to respective voltage measurement pads of a cell supervision circuit 20.

After the flexible interconnector 30 is wrapped around the pre-module 55, the actual electric connections between the contact portions 34 of the wrapped flexible interconnector 30 and at least one of the differently oriented surfaces of the battery cells 10, the at least one heat exchanger 40 and the at least one busbar 45 are provided by welding and/or soldering. Hence, the conducting lines 33 are actually connected to the adjacent component of the pre-module 55 in the region of the contact portion 34 and via the contact aperture 36. Finally, the CSC 20 is attached to the pre-module 55 to form the battery module 50 and a connector plug 38 at a terminal end of the flexible interconnector 10 is connected to the CSC 20.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips.

Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a ROM, flash drive, or the like. Also, a person of skill in the art should recognize that the functionality of various computing devices may be combined or integrated into a single computing device, or the functionality of a particular computing device may be distributed across one or more other computing devices without departing from the scope of the invention's embodiments.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly defined so.

### Reference signs

- 10: battery cell
- 13: cell case
- 14: base surface
- 14a: lower base surface
- 14b: upper base surface
- 15: lateral surface
- 20: cell supervision circuit, CSC
- 30: flexible interconnector
- 31: first insulating main surface
- 32: second insulating main surface
- 33: conducting lines
- 34: contact portion
- 34a: first contact portion
- 34b: second contact portion
- 34c: third contact portion
- 35: strip-shaped flexible printed circuit, FPC
- 36: contact aperture
- 36a: first contact aperture
- 36b: second contact aperture
- 36c: third contact aperture
- 37: connecting portion
- 371: first connecting portion
- 372: second connecting portion
- 38: connector plug
- 38a: first connector plug
- 38b: second connector plug
- 39: thermistor
- 39a: first thermistor
- 39b: second thermistor
- 40: heat exchanger
- 41: top cover
- 42: base plate
- 45: busbar
- 50: battery module
- 55: pre-module
- 60: rotating table

## Claims

1. Battery module (50), comprising:
a plurality of aligned battery cells (10) comprising different surfaces facing into different directions;
at least one heat exchanger (40) in thermal contact with the plurality of battery cells (10);
a flexible interconnector (30) comprising a strip-shaped flexible printed circuit (35), FPC, the FPC (35) having a first insulating main surface (31), a second insulating main surface (32) opposite the first insulating main surface (31) and a plurality of thermally and/or electrically conducting lines (33) disposed between the first insulating main surface (31) and the second insulating main surface (32);
a cell supervision circuit (20), CSC, configured to be electrically connected to at least one connecting portion (37) of the flexible interconnector (30);
wherein each conducting line (33) comprises at least one contact portion (34) being exposed by a contact aperture (36) in the first insulating main surface (31) and/or in the second insulating main surface (32) and the at least one connecting portion (37) and
wherein the flexible interconnector (30) is wrapped around the plurality of aligned battery cells (10) and around the at least one heat exchanger (40) such that the plurality of conducting lines (33) are in electric or thermal contact with the surfaces of different orientations of the plurality of aligned battery cells (10) and with the at least one heat exchanger (40) via the contact aperture (36).

2. Battery module (50) according to claim 1, wherein the battery cells (10) are cylindrical battery cells, and wherein the flexible interconnector (30) is wrapped around the battery cells (10) such that the contact portions (34) contact base surfaces (14) and lateral surfaces (15) of the battery cells (10).

3. Battery module (50) according to claim 1, wherein the battery cells (10) are prismatic battery cells, each comprising a cell case and a cap assembly placed on the cell case, and wherein the flexible interconnector (30) is wrapped around prismatic battery cells such that contact portions (34) contact the cell cases and the cap assemblies of prismatic battery cells.

4. Battery module (50) according to any one of the preceding claims, further comprising a plurality of busbars (45), each busbar (45) interconnecting cell terminals of at least two battery cells (10), wherein the flexible interconnector (30) is wrapped around battery cells (10) and around the busbars (45) such that contact portions (34) contact battery cells (10) and busbars (45).

5. Battery module (50) according to any one of the preceding claims, wherein the connecting portions (37) of at least some of the conducting lines (33) are arranged at a terminal end of the strip-shaped FPC (35).

6. Battery module (50) according to any one of the preceding claims, wherein each conducting line (33) extends across the whole length of the strip-shaped FPC (35) and comprises a first connecting portion (371) at a first terminal end and a second connecting portion (372) at a second terminal end.

7. Battery module (50) according to claim 5 or 6, wherein the flexible interconnector (30) further comprises at least one connector plug (38) attached to at least one terminal end of the strip-shaped FPC (35), the connector plug (38) being connected to at least some of the conducting lines (33) and being configured for being electrically connected to the CSC (20).

8. Battery module (50) according to any one of the preceding claims, wherein the connecting portions (37) of at least some of the conducting lines (33) are arranged at a center part of the strip-shaped FPC (35).

9. Battery module (50) according to any one of the preceding claims, wherein each of the contact apertures (36) exposes one or a subset of conducting lines (33).

10. Battery module (50) according to any one of the preceding claims, wherein a first subset of conducting lines (33) serve for measuring electric voltages at the respective contact portions (34) and wherein a second subset of conducting lines (33) serve for measuring temperatures at the respective second contact portions (34).

11. Battery module (50) according to claim 10, wherein thermistors (39) are located at the contact portions (34) of the second subset of conducting lines (33).

12. Method for manufacturing a battery module (50) of claim 1, the method comprising the steps of:
providing a pre-module (55) comprising a plurality of aligned battery cells (10) comprising different surfaces facing into different direction, at least one heat exchanger (40) in thermal contact with the plurality of battery cells (10);
attaching a terminal end of a flexible interconnector (30) to the pre-module (55), the flexible interconnector (30) comprising a strip-shaped flexible printed circuit (35), FPC,
wherein the pre-module (55) further comprises at least one cell supervision circuit (20), CSC, configured to be electrically connected to at least one connecting portion (37) of the flexible interconnector (30),
wherein the FPC (35) has a first insulating main surface (31), a second insulating main surface (32) opposite the first insulating main surface (31) and a plurality of thermally and/or electrically conducting lines (33) disposed between the first insulating main surface (31) and the second insulating main surface (32), and
wherein each conducting line (33) comprises at least one contact portion (34) being exposed by a contact aperture (36) in the first insulating main surface (31) and/or the second insulating main surface (32) and the at least one connecting portion (37); and
wrapping the flexible interconnector (30) around the pre-module (55) such that the plurality of conducting lines (33) are in electric or thermal contact with the surfaces of different orientations of the plurality of aligned battery cells (10) and with the at least one heat exchanger (40) via the contact aperture (36).

13. Method according to claim 12, wherein the pre-module (55) further comprises at least one busbar (45) interconnecting cell terminals of at least two battery cells (10),
wherein the flexible interconnector (30) is wrapped around the pre-module (55) such that the contact portions (34) contact the at least one busbar (45), and/or
wherein the terminal end of the flexible interconnector (30) is attached to the CSC (20).

14. Method according to claim 12 or 13, wherein electric connections between the contact portions (34) of the wrapped flexible interconnector (30) and the different surfaces facing into different directions or, the at least one heat exchanger (40) are provided by welding, stamping, brazing and/or soldering.

## Patentansprüche

1. Batteriemodul (50), umfassend:
eine Vielzahl von ausgerichteten Batteriezellen (10), die unterschiedliche, in verschiedene Richtungen weisende Oberflächen aufweisen;
mindestens einen Wärmetauscher (40), der in thermischem Kontakt mit der Vielzahl der Batteriezellen (10) steht;
eine flexible Verbindungsleitung (30), die eine streifenförmige flexible Leiterplatte (35), FPC, umfasst, wobei die FPC (35) eine erste isolierende Hauptoberfläche (31), eine zweite isolierende Hauptoberfläche (32) gegenüber der ersten isolierenden Hauptoberfläche (31) und eine Vielzahl von thermisch und/oder elektrisch leitenden Leitungen (33) aufweist, die zwischen der ersten isolierenden Hauptoberfläche (31) und der zweiten isolierenden Hauptoberfläche (32) angeordnet sind;
eine Zellenüberwachungsschaltung (20), CSC, die so konfiguriert ist, dass sie mit mindestens einem Verbindungsabschnitt (37) der flexiblen Verbindungsleitung (30) elektrisch verbunden ist;
wobei jede leitende Leitung (33) mindestens einen Kontaktabschnitt (34) aufweist, der durch eine Kontaktöffnung (36) in der ersten isolierenden Hauptoberfläche (31) und/oder in der zweiten isolierenden Hauptoberfläche (32) und dem mindestens einen Verbindungsabschnitt (37) freigelegt ist, und
wobei die flexible Verbindungsleitung (30) um die Vielzahl von ausgerichteten Batteriezellen (10) und um den mindestens einen Wärmetauscher (40) gewickelt ist, so dass die Vielzahl von leitenden Leitungen (33) über die Kontaktöffnung (36) in elektrischem oder thermischem Kontakt mit den Oberflächen unterschiedlicher Ausrichtungen der Vielzahl von ausgerichteten Batteriezellen (10) und mit dem mindestens einen Wärmetauscher (40) stehen.

2. Batteriemodul (50) nach Anspruch 1, wobei die Batteriezellen (10) zylindrische Batteriezellen sind und wobei die flexible Verbindungsleitung (30) so um die Batteriezellen (10) gewickelt ist, dass die Kontaktabschnitte (34) mit Basisflächen (14) und Seitenflächen (15) der Batteriezellen (10) in Kontakt stehen.

3. Batteriemodul (50) nach Anspruch 1, wobei die Batteriezellen (10) prismatische Batteriezellen sind, die jeweils ein Zellengehäuse und eine auf dem Zellengehäuse angeordnete Kappenanordnung umfassen, und wobei die flexible Verbindungsleitung (30) so um die prismatischen Batteriezellen gewickelt ist, dass Kontaktabschnitte (34) die Zellengehäuse und die Kappenanordnungen der prismatischen Batteriezellen kontaktieren.

4. Batteriemodul (50) nach einem der vorhergehenden Ansprüche, das ferner eine Vielzahl von Sammelschienen (45) umfasst, wobei jede Sammelschiene (45) Zellenanschlüsse von mindestens zwei Batteriezellen (10) miteinander verbindet, wobei die flexible Verbindungsleitung (30) um die Batteriezellen (10) und um die Sammelschienen (45) gewickelt ist, so dass Kontaktabschnitte (34) mit den Batteriezellen (10) und den Sammelschienen (45) in Kontakt stehen.

5. Batteriemodul (50) nach einem der vorhergehenden Ansprüche, wobei die Verbindungsabschnitte (37) von mindestens einigen der leitenden Leitungen (33) an einem Anschlussende der streifenförmigen FPC (35) angeordnet sind.

6. Batteriemodul (50) nach einem der vorhergehenden Ansprüche, wobei sich jede leitende Leitung (33) über die gesamte Länge der streifenförmigen FPC (35) erstreckt und einen ersten Verbindungsabschnitt (371) an einem ersten Anschlussende und einen zweiten Verbindungsabschnitt (372) an einem zweiten Anschlussende umfasst.

7. Batteriemodul (50) nach Anspruch 5 oder 6, wobei die flexible Verbindungsleitung (30) ferner mindestens einen Verbindungsstecker (38) umfasst, der an mindestens einem Anschlussende der streifenförmigen FPC (35) befestigt ist, wobei der Verbindungsstecker (38) mit mindestens einigen der leitenden Leitungen (33) verbunden ist und so konfiguriert ist, dass er elektrisch mit der CSC (20) verbunden ist.

8. Batteriemodul (50) nach einem der vorhergehenden Ansprüche, wobei die Verbindungsabschnitte (37) von mindestens einigen der leitenden Leitungen (33) in einem mittleren Teil der streifenförmigen FPC (35) angeordnet sind.

9. Batteriemodul (50) nach einem der vorhergehenden Ansprüche, wobei jede der Kontaktöffnungen (36) eine oder eine Teilmenge von leitenden Leitungen (33) freilegt.

10. Batteriemodul (50) nach einem der vorhergehenden Ansprüche, wobei eine erste Teilmenge von leitenden Leitungen (33) zur Messung elektrischer Spannungen an den jeweiligen Kontaktabschnitten (34) dient und wobei eine zweite Teilmenge von leitenden Leitungen (33) zur Messung von Temperaturen an den jeweiligen zweiten Kontaktabschnitten (34) dient.

11. Batteriemodul (50) nach Anspruch 10, wobei Thermistoren (39) an den Kontaktabschnitten (34) der zweiten Teilmenge von Leiterbahnen (33) angeordnet sind.

12. Verfahren zur Herstellung eines Batteriemoduls (50) nach Anspruch 1, wobei das Verfahren die folgenden Schritte umfasst:
Bereitstellen eines Vormoduls (55), das eine Vielzahl von ausgerichteten Batteriezellen (10), die unterschiedliche, in verschiedene Richtungen weisende Oberflächen aufweisen, und mindestens einen Wärmetauscher (40), der in thermischem Kontakt mit der Vielzahl von Batteriezellen (10) steht, aufweist;
Befestigen eines Anschlussendes einer flexiblen Verbindungsleitung (30) an dem Vormodul (55), wobei die flexible Verbindungsleitung (30) eine streifenförmige flexible Leiterplatte (35), FPC, umfasst,
wobei das Vormodul (55) ferner mindestens eine Zellenüberwachungsschaltung (20), CSC, umfasst, die so konfiguriert ist, dass sie mit mindestens einem Verbindungsabschnitt (37) der flexiblen Verbindungsleitung (30) elektrisch verbunden ist,
wobei die FPC (35) eine erste isolierende Hauptoberfläche (31), eine zweite isolierende Hauptoberfläche (32) gegenüber der ersten isolierenden Hauptoberfläche (31) und eine Vielzahl von thermisch und/oder elektrisch leitenden Leitungen (33) aufweist, die zwischen der ersten isolierenden Hauptoberfläche (31) und der zweiten isolierenden Hauptoberfläche (32) angeordnet sind, und
wobei jede leitende Leitung (33) mindestens einen Kontaktabschnitt (34) umfasst, der durch eine Kontaktöffnung (36) in der ersten isolierenden Hauptoberfläche (31) und/oder der zweiten isolierenden Hauptoberfläche (32) und dem mindestens einen Verbindungsabschnitt (37) freigelegt ist; und
Wickeln der flexiblen Verbindungsleitung (30) um das Vormodul (55), so dass die Vielzahl von leitenden Leitungen (33) über die Kontaktöffnung (36) in elektrischem oder thermischem Kontakt mit den Oberflächen unterschiedlicher Ausrichtungen der Vielzahl von ausgerichteten Batteriezellen (10) und mit dem mindestens einen Wärmetauscher (40) stehen.

13. Verfahren nach Anspruch 12, wobei das Vormodul (55) ferner mindestens eine Sammelschiene (45) umfasst, die Zellenanschlüsse von mindestens zwei Batteriezellen (10) miteinander verbindet,
wobei die flexible Verbindungsleitung (30) um das Vormodul (55) gewickelt ist, so dass die Kontaktabschnitte (34) mit der mindestens einen Sammelschiene (45) in Kontakt stehen, und/oder
wobei das Anschlussende der flexiblen Verbindungsleitung (30) an der CSC (20) befestigt ist.

14. Verfahren nach Anspruch 12 oder 13, wobei elektrische Verbindungen zwischen den Kontaktabschnitten (34) der gewickelten flexiblen Verbindungsleitung (30) und den verschiedenen, in unterschiedliche Richtungen weisenden Oberflächen oder dem mindestens einen Wärmetauscher (40) durch Schweißen, Stanzen, Hartlöten und/oder Löten hergestellt werden.

## Revendications

1. Module de batterie (50) comprenant :
une pluralité de cellules de batterie (10) alignées comprenant différentes surfaces orientées dans différentes directions ;
au moins un échangeur de chaleur (40) en contact thermique avec la pluralité de cellules de batterie (10) ;
un interconnecteur flexible (30) comprenant un circuit imprimé flexible en forme de bande (FPC) (35) le FPC (35) ayant une première surface principale isolante (31), une deuxième surface principale isolante (32) opposée à la première surface principale isolante (31) et une pluralité de lignes thermiquement et/ou électriquement conductrices (33) disposées entre la première surface principale isolante (31) et la deuxième surface principale isolante (32) ;
un circuit de supervision de cellule (CSC) (20) configuré pour être connecté électriquement à au moins une partie connexion (37) de l'interconnecteur flexible (30) ;
dans lequel chaque ligne conductrice (33) comprend au moins une partie contact (34) mise à nu par une ouverture de contact (36) dans la première surface principale isolante (31) et/ou dans la deuxième surface principale isolante (32) et l'au moins une partie connexion (37) et
dans lequel l'interconnecteur flexible (30) est enroulé autour de la pluralité de cellules de batterie (10) alignées et autour de l'au moins un échangeur de chaleur (40) de telle sorte que la pluralité de lignes conductrices (33) sont en contact électrique ou thermique avec les surfaces de différentes orientations de la pluralité de cellules de batterie (10) alignées et avec l'au moins un échangeur de chaleur (40) par l'intermédiaire de l'ouverture de contact (36).

2. Module de batterie (50) selon la revendication 1, dans lequel les cellules de batterie (10) sont des cellules de batterie cylindriques, et dans lequel l'interconnecteur flexible (30) est enroulé autour des cellules de batterie (10) de telle sorte que les parties contact (34) entrent en contact avec des surfaces de base (14) et des surfaces latérales (15) des cellules de batterie (10).

3. Module de batterie (50) selon la revendication 1, dans lequel les cellules de batterie (10) sont des cellules de batterie prismatiques, comprenant chacune un boîtier de cellule et un ensemble capuchon placé sur le boîtier de cellule, et dans lequel l'interconnecteur flexible (30) est enroulé autour de cellules de batterie prismatiques de telle sorte que des parties contact (34) entrent en contact avec les boîtiers de cellule et les ensembles capuchon de cellules de batterie prismatiques.

4. Module de batterie (50) selon l'une quelconque des revendications précédentes, comprenant en outre une pluralité de barres omnibus (45), chaque barre omnibus (45) interconnectant des bornes de cellule d'au moins deux cellules de batterie (10), dans lequel l'interconnecteur flexible (30) est enroulé autour de cellules de batterie (10) et autour des barres omnibus (45) de telle sorte que des parties contact (34) entrent en contact avec des cellules de batterie (10) et des barres omnibus (45).

5. Module de batterie (50) selon l'une quelconque des revendications précédentes, dans lequel les parties connexion (37) d'au moins certaines des lignes conductrices (33) sont agencées au niveau d'une extrémité de borne du FPC (35) en forme de bande.

6. Module de batterie (50) selon l'une quelconque des revendications précédentes, dans lequel chaque ligne conductrice (33) s'étend sur toute la longueur du FPC (35) en forme de bande et comprend une première partie connexion (371) au niveau d'une première extrémité de borne et une deuxième partie connexion (372) au niveau d'une deuxième extrémité de borne.

7. Module de batterie (50) selon la revendication 5 ou 6, dans lequel l'interconnecteur flexible (30) comprend en outre au moins une fiche de connecteur (38) fixée à au moins une extrémité de borne du FPC (35) en forme de bande, la fiche de connecteur (38) étant connectée à au moins certaines des lignes conductrices (33) et étant configurée pour être connectée électriquement au CSC (20).

8. Module de batterie (50) selon l'une quelconque des revendications précédentes, dans lequel les parties connexion (37) d'au moins certaines des lignes conductrices (33) sont agencées au niveau d'un élément central du FPC (35) en forme de bande.

9. Module de batterie (50) selon l'une quelconque des revendications précédentes, dans lequel chacune des ouvertures de contact (36) met à nu une ou un sous-ensemble de lignes conductrices (33).

10. Module de batterie (50) selon l'une quelconque des revendications précédentes, dans lequel un premier sous-ensemble de lignes conductrices (33) servent à mesurer des tensions électriques au niveau des parties contact (34) respectives et dans lequel un deuxième sous-ensemble de lignes conductrices (33) servent à mesurer des températures au niveau des deuxièmes parties contact (34) respectives.

11. Module de batterie (50) selon la revendication 10, dans lequel des thermistances (39) sont situées au niveau des parties contact (34) du deuxième sous-ensemble de lignes conductrices (33).

12. Procédé de fabrication d'un module de batterie (50) selon la revendication 1, le procédé comprenant les étapes consistant à :
fournir un prémodule (55) comprenant une pluralité de cellules de batterie (10) alignées comprenant différentes surfaces orientées dans une direction différente, au moins un échangeur de chaleur (40) en contact thermique avec la pluralité de cellules de batterie (10) ;
fixer une extrémité de borne d'un interconnecteur flexible (30) au prémodule (55), l'interconnecteur flexible (30) comprenant un circuit imprimé flexible (FPC) (35) en forme de bande,
dans lequel le prémodule (55) comprend en outre au moins un circuit de supervision de cellule (CSC) (20), configuré pour être connecté électriquement à au moins une partie connexion (37) de l'interconnecteur flexible (30),
dans lequel le FPC (35) a une première surface principale isolante (31), une deuxième surface principale isolante (32) opposée à la première surface principale isolante (31) et une pluralité de lignes thermiquement et/ou électriquement conductrices (33) disposées entre la première surface principale isolante (31) et la deuxième surface principale isolante (32), et
dans lequel chaque ligne conductrice (33) comprend au moins une partie contact (34) mise à nu par une ouverture de contact (36) dans la première surface principale isolante (31) et/ou la deuxième surface principale isolante (32) et l'au moins une partie connexion (37) ; et
enrouler l'interconnecteur flexible (30) autour du prémodule (55) de telle sorte que la pluralité de lignes conductrices (33) sont en contact électrique ou thermique avec les surfaces de différentes orientations de la pluralité de cellules de batterie (10) alignées et avec l'au moins un échangeur de chaleur (40) par l'intermédiaire de l'ouverture de contact (36).

13. Procédé selon la revendication 12, dans lequel le prémodule (55) comprend en outre au moins une barre omnibus (45) interconnectant des bornes de cellule d'au moins deux cellules de batterie (10),
dans lequel l'interconnecteur flexible (30) est enroulé autour du prémodule (55) de telle sorte que les parties contact (34) entrent en contact avec l'au moins une barre omnibus (45), et/ou
dans lequel l'extrémité de borne de l'interconnecteur flexible (30) est fixée au CSC (20).

14. Procédé selon la revendication 12 ou 13, dans lequel des connexions électriques entre les parties contact (34) de l'interconnecteur flexible (30) enveloppé et les différentes surfaces orientées dans différentes directions ou, l'au moins un échangeur de chaleur (40) sont fournis par soudage, estampage, brasage et/ou soudure.
